# EUROPEAN PATENT SPECIFICATION

(11) **EP 3 436 758 B1**
(45) Date of publication and mention of the grant of the patent: **23.02.2022**
(21) Application number: 17776907.2
(22) Date of filing: 03.04.2017
(51) Int. Cl.: F28F 1/00, F28F 1/02, F28F 1/06, F25B 39/00, F25B 39/02, F28D 5/00, F28D 5/02

(54) **MULTI-CAVITY TUBES FOR AIR-OVER EVAPORATIVE HEAT EXCHANGER**
ROHRE MIT MEHREREN HOHLRÄUMEN FÜR VERDAMPFENDEN AIR-OVER-WÄRMETAUSCHER
TUBES À CAVITÉS MULTIPLES POUR ÉCHANGEUR DE CHALEUR À ÉVAPORATION D'AIR

(30) Priority: 01.04.2016 US 201662316654 P
(43) Date of publication of application: 06.02.2019
(73) Proprietor: Evapco, Inc., Taneytown, MD 21787 (US)
(72) Inventor: KANE, Jeffrey, Taneytown Maryland 21787 (US); VADDER, Davey Joe, Taneytown Maryland 21787 (US)
(74) Representative: Barker Brettell LLP
(86) International application number: PCT/US2017/025741
(87) International publication number: WO 2017/173445

(56) References cited:
- WO-A1-2007/082921
- DE-U1-202007 016 841
- GB-A- 139 176
- GB-A- 139 176
- GB-A- 876 040
- GB-A- 2 039 357
- US-A1- 2011 146 594
- US-A1- 2012 012 292
- US-A1- 2012 036 718
- US-A1- 2013 299 132
- US-B1- 6 820 685

## Description

### Field of the Invention

This invention relates to evaporative air-over heat exchangers.

### Description of the Background

It is well known that elliptical tubes work well for evaporative heat exchangers. Increasing the heat exchanger tube density works well for systems that have no airflow over the coil, while increasing the external surface area using extended fins works well in systems that have airflow over the coil. However, both of these methods increase the weight of the heat exchanger coil and consequent cost per heat exchanger compared to conventional tube-coil designs since the tubes are required to have a minimum wall thickness to operate under internal pressure without deforming. US2012/036718 discloses a known evaporative heat exchanger coil, and US6820685 discloses a known evaporative heat exchanger.

### SUMMARY OF THE INVENTION

This invention serves to solve the problem of increased weight and cost with incremental improvements in capacity by improving the thermal capacity while *decreasing* the cost for equivalent thermal capacity with a special tube shape and pattern that increases the prime surface area in contact with the airstream thereby improving thermal capacity, at the same time decreasing the thickness of the heat exchanger tubes thereby decreasing the cost for equivalent thermal capacity. The effective diameter of the tube is reduced by the design of the invention, which allows the tube wall to be reduced in thickness for the same internal pressure. The open air face area to tube face area ratio determines to a large extent the effectiveness of the heat exchanger. If this ratio is too low, the heat exchanger will have an undesirable airside pressure drop, lowering its effectiveness in an evaporative heat exchanger. This effect is more pronounced in evaporative heat exchangers than in a dry air heat exchanger because of the water-air interaction. The tube shape and pattern of the invention serves to keep this ratio equal to or lower than conventional heat exchangers of the same volume (i.e., coil volume, that is, the volume defined by the outer dimensions of the coil, LxWxH) while increasing the surface area of the coils. The combination of increasing the coil surface area, reducing the tube wall thickness, and maintaining or decreasing the airside pressure drop using the new tube design of the invention serve to create a heat exchanger with superior thermal efficiency and cost effectiveness.

Therefore, there is provided according to various embodiments of the invention multi-lobed tubes that may be used in place of single round or elliptical-shaped tubes of prior art heat exchangers. These multi-lobed tubes are tall and narrow in vertical cross section. The multi-lobed tubes may have 2, 3, 4 or more lobes per tube. The multi-lobed shape allows the tubes to have a smaller air-face profile and thinner wall while maintaining the working pressure limit and outside surface area per tube. The narrow air-face profile also allows many more tubes to exist in the same heat exchanger volume while maintaining or decreasing the open air face area to tube face area ratio to maintain or decrease the airside pressure drop and maintain or increase the airflow volume per horsepower. Heat exchangers having the tube design of the present invention will work equally well as fluid coolers or refrigerant condensers.

Accordingly, there is presented according to an embodiment of the invention an air-over evaporative heat exchanger coil having multi-lobed tubes that have the same or higher surface area as a heat exchanger coil of the same size/volume with conventional round or elliptical tubes.

Accordingly, there is presented according to an embodiment of the invention an air-over evaporative heat exchanger coil having multi-lobed tubes that use much thinner tube walls than a conventional single tube of the same outside surface area.

Accordingly, there is presented according to an embodiment of the invention an air-over evaporative heat exchanger coil having an open air face area to tube face area ratio equivalent or greater than a conventional heat exchanger coil of the same size/volume with conventional round or elliptical tubes.

Accordingly, there is presented according to an embodiment of the invention an air-over evaporative heat exchanger coil having tube surface area significantly larger than a conventional heat exchanger coil of the same size/volume with conventional round or elliptical tubes.

According to the invention there is provided an air-over evaporative heat exchanger coil comprised of: a plurality of multi-lobed tubes arranged in a tube bundle,_wherein lobes of said multi-lobed tubes are separated from one-another by a pinch weld located where opposing inside tube surfaces meet.

There is further presented according to an embodiment of the invention an air-over evaporative heat exchanger coil with multi-lobed tube having exactly two lobes.

There is further presented according to an embodiment of the invention an air-over evaporative heat exchanger coil with multi-lobed tubes having exactly three lobes.

There is further presented according to an embodiment of the invention an air-over evaporative heat exchanger coil with multi-lobed tubes with 100%-300% of the tube surface area of a coil having the same external dimensions with 2.16cm (0.85 inch) elliptical tubes.

There is further presented according to an embodiment of the invention an air-over evaporative heat exchanger coil with multi-lobed tubes with 25%-150% of the open-air passage area of a coil having the same external dimensions with 2.16cm (0.85 inch) elliptical tubes.

There is further presented according to an embodiment of the invention an air-over evaporative heat exchanger coil with multi-lobed tubes wherein the major axis of the tube is tilted 0 to 25 degrees relative to vertical.

According to another aspect of the invention there is provided an evaporative heat exchanger for cooling or condensing a process fluid, comprising: an indirect heat exchange section; a water distribution system located above the indirect heat exchange section and configured to spray water over the indirect heat exchange section; wherein the indirect heat exchange section comprises a process fluid inlet header and a process fluid outlet header, and an array of tubes multi-lobed tubes connecting said inlet header and said outlet header, said tubes further having lengths extending along a longitudinal axis; the evaporative heat exchanger also including a plenum where water distributed by said water distribution system and having received heat from said indirect section is cooled by direct contact with air moving through said plenum; a water recirculation system, including pump and pipes, configured to take water collecting at the bottom of said plenum and deliver it to said water distribution system; and an air mover configured to move ambient air into said plenum and up through said indirect section, wherein lobes of said multi-lobed tubes are separated from one-another by a pinch weld positioned where opposing inside tube surfaces meet.

There is further presented according to an embodiment of the invention, a heat exchange tube bundle in which the multi-lobed tubes are straight and are each connected at a first end to a process fluid inlet header and at a second end to a process fluid outlet header.

There is further presented according to an embodiment of the invention a heat exchange tube bundle in which the multi-lobed tubes are serpentine and each serpentine tube comprises a plurality of lengths connected at each end to adjacent lengths of the same serpentine tube by tube bends and connected at one end of a serpentine tube to a process fluid inlet header, and at a second end to a process fluid outlet header.

### BRIEF DESCRIPTION OF THE DRAWINGS

The subsequent description of the preferred embodiments of the present invention refers to the attached drawings, wherein:
Figure 1 is a cutaway side view of a prior art evaporative heat exchanger.
Figure 2 is a cutaway perspective view of a prior art evaporative heat exchanger.
Figure 3 shows an outside perspective view of a conventional prior art elliptical evaporative heat exchanger tube.
Figure 4 shows a cross-sectional view of the conventional prior art elliptical evaporative heat exchanger tube of Figure 3.
Figure 5 is a representation of a cross-sectional view of a conventional prior art evaporative heat exchanger tube bundle having elliptical tubes.
Figure 6 is another representation of a cross-sectional view of a conventional prior art evaporative heat exchanger tube bundle having elliptical tubes.
Figure 7 is a graphical representation of the open air face area to tube face area for a conventional prior art evaporative heat exchanger tube bundle having elliptical tubes.
Figure 8 shows a cross-sectional view of a 2-lobed or "peanut"-shaped heat exchange tube according to an embodiment of the invention.
Figure 9 shows an outside perspective view of a 2-lobed or "peanut"-shaped heat exchange tube according to an embodiment of the invention.
Figure 10 is a representation of a cross-sectional view of an evaporative heat exchanger tube bundle having 2-lobed or "peanut"-shaped heat exchange tubes according to an embodiment of the invention.
Figure 11a is another representation of a cross-sectional view of an evaporative heat exchanger tube bundle having 2-lobed or "peanut"-shaped heat exchange tubes according to an embodiment of the invention.
Figure 11b is another representation of a cross-sectional view of an evaporative heat exchanger tube bundle having 2-lobed or "peanut"-shaped heat exchange tubes according to an embodiment of the invention.
Figure 12 shows a graphical representation of the open air face area to tube face area for an evaporative heat exchanger tube bundle having 2-lobed or "peanut"-shaped heat exchange tubes according to an embodiment of the invention.
Figure 13 shows several multi-tube heat exchange tube unit and "peanut"-type tube configurations according to further alternate embodiments of the invention.
Figure 14 shows the effect of densifying a coil by using narrower tubes of the same diameter and thickness.
Figure 15 shows the relationship between tube width and required steel tube thickness for equivalent working pressure for round and "squashed" 1.05" diameter tubes versus "peanut" shaped tubes with 25% more external surface area.

### DETAILED DESCRIPTION OF THE INVENTION

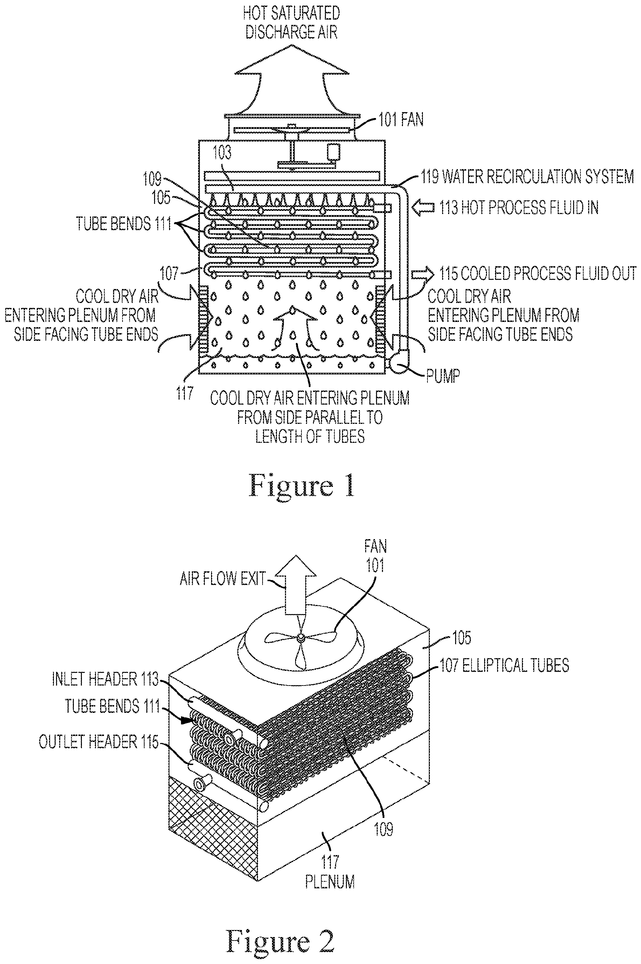

Figures 1 and 2 show an induced draft single cell evaporative cooler according to the prior art. Fan 101 draws air into the unit and forces it out the top of the unit. Below the fan is a water distribution system 103 that distributes water over the tube coil 105. The tube coil is made of an array of serpentine elliptical tubes 107. Each length of tube 109 is connected at its ends to an adjacent higher and/or lower tube length by a tube bend 111. Process fluid to be cooled enters the tubes via an inlet header 113 and exits the tubes via an outlet header 115. Beneath the tube coil is the plenum 117, where air enters the unit and the water that is delivered to the unit via the water distribution system 103 is cooled via direct heat exchange with the air, collects at the bottom and recirculated to the top via water recirculation system 119.

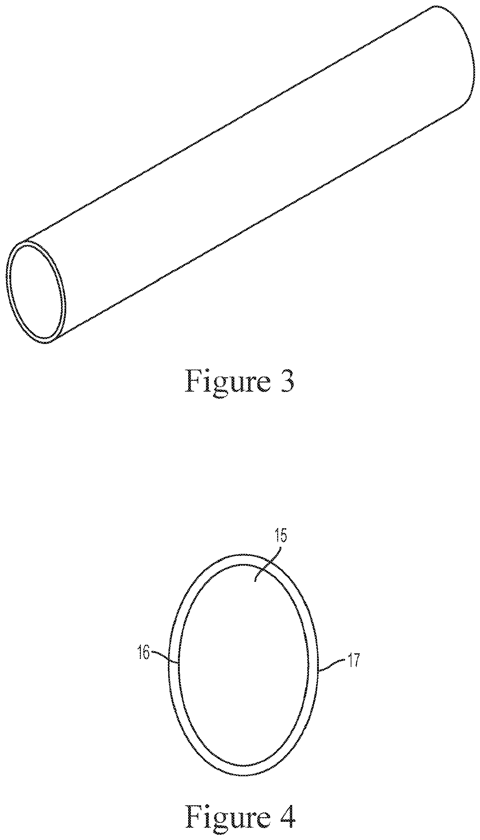

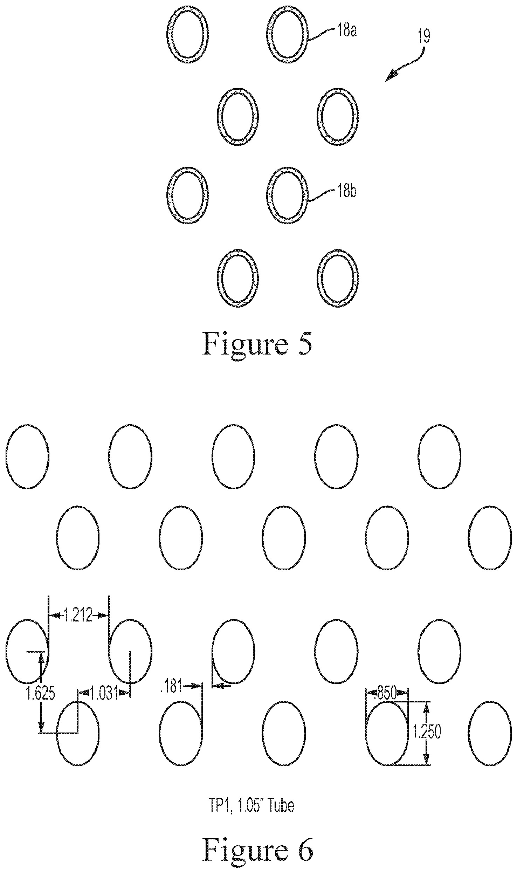

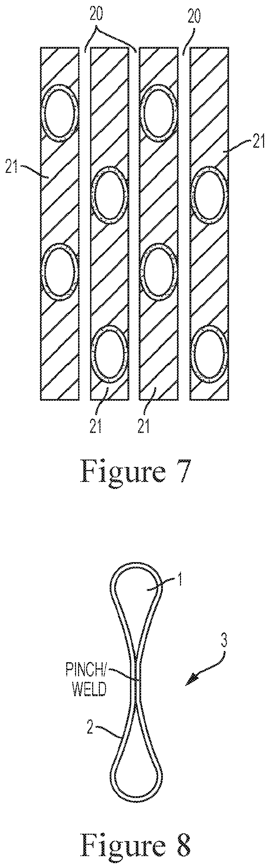

Figures 3 and 4 shows a conventional evaporative heat exchanger elliptical tube 107 of the type used in the prior art heat exchanger of Figures 1 and 2. A working fluid such as water, glycol, or ammonia 15 is contained within the tube wall 16. Water droplet-filled air 17 flows around the tube from bottom to top. Figures 5 and 6 show how a plurality of tubes of the type shown in Figures 3 and 4 are typically arranged in a tube bundle in a heat exchanger of Figures 1 and 2. Multiple tubes 18a,b, etc., are generally arranged in a patterned allow water droplet-filled air 19 to pass around the tubes under the force of gravity. The ratio of open air face area 20 to tube face area for this arrangement is shown in Figure 7, according to standard tube sizing and spacing shown in Figure 6. Tubes of this type are typically formed from round 2.67cm (1.05 inches) diameter tubing having a tube wall thickness of 0.140cm (0.055 inches), which are then mechanically "squeezed" into an ellipse having a minor diameter of 2.159cm (0.850 inches). Figure 7 shows graphical representation of the open air face area 20 to tube face area 21 for a standard evaporative heat exchanger tube bundle with elliptical tubes having a tube width of 2.159cm (0.850 inches).

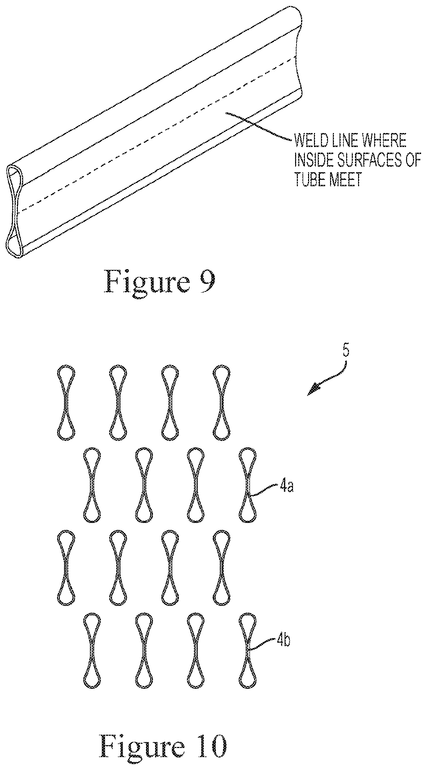

Figures 8 and 9 show two-lobed "peanut"-shaped tubes according to an embodiment of the invention. As with prior art tubes, working fluid such as water, glycol, or ammonia 1 is contained within the tube wall 2. Water droplet-filled air 3 flows around the tube from bottom to top. According to a preferred embodiment, the tube height is 4.57cm (1.790 inches), the tube width at the widest cross-section of each lobe is 0.953cm (0.375 inches). However, these dimensions should not be deemed to limit the invention, as multi-lobed tubes of any dimensions may be used according to the invention, including tube heights of 3.175cm (1.250 inches) to 6.350cm (2.500 inches) with lobe cross sections of 0.508cm (0.200 inches) to 1.270cm (0.500 inches). The cross-sectional shape of the lobes may be range from teardrop to nearly circular to circular. According to a preferred embodiment opposing inside surfaces of the tubes are welded together at the pinch, i.e., where the inside tube surfaces meet (roughly at the center of the tube in the case of two-lobed tubes). According to various embodiments, the tubes may be finless or finned. Tube wall width is preferably 0.140cm (0.055 inches), but can range from 0.013cm (0.005 inches) to (0.06 inches) or greater. In any event, embodiments of the invention can withstand working pressures of 2.07Mpa (300 psi) to 2.76MPa (400 psi) and beyond.

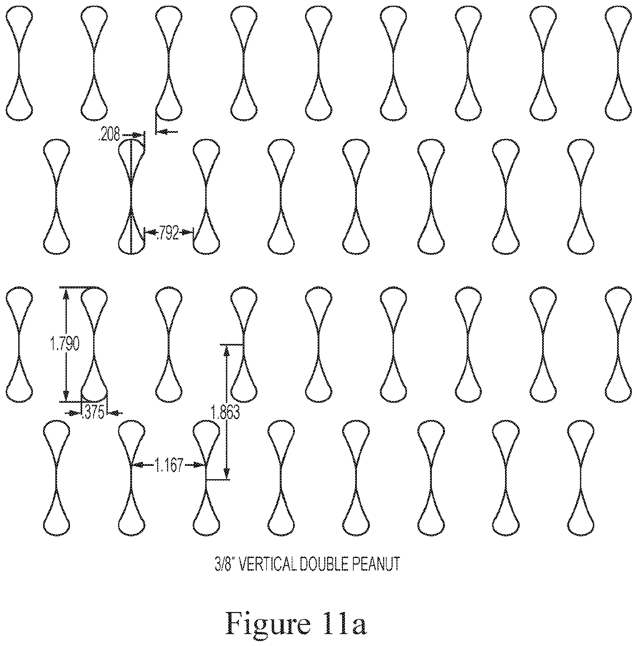

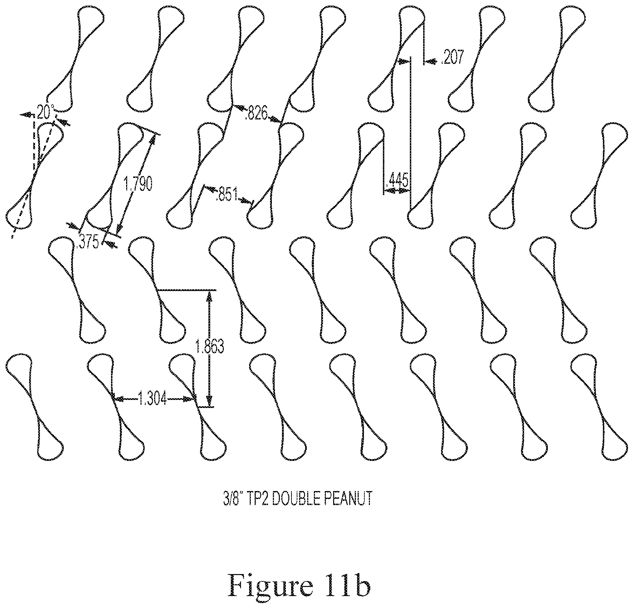

Figures 10, 11a and 11b show cross-sectional views of evaporative heat exchanger tube bundles including an arrangement of 2-lobed or "peanut"-shaped tubes of Figures 8 and 9. According to this embodiment, the tube bundle has twice the prime external tube surface area of a conventional heat exchanger tube bundle (2.67cm (1.05 inch)) round tubes or (2.16cm (0.85 inch) elliptical tubes)) of the same volume (i.e., coil volume, that is, the volume defined by the outer dimensions of the coil, LxWxH). Multiple tubes 4a, 4b, etc., are arranged according to the pattern shown to allow water droplet-filled air 5 to pass around the tubes. According to a preferred embodiment, spacing between vertically adjacent rows of tubes (measured center to center) is 102%-106% of the tube height, more preferably 104% of the tube height. Preferred spacing between horizontally adjacent tubes (measured center to center) is 305% to 320% of the lobe width, more preferably 310% to 312% and most preferably 311%.

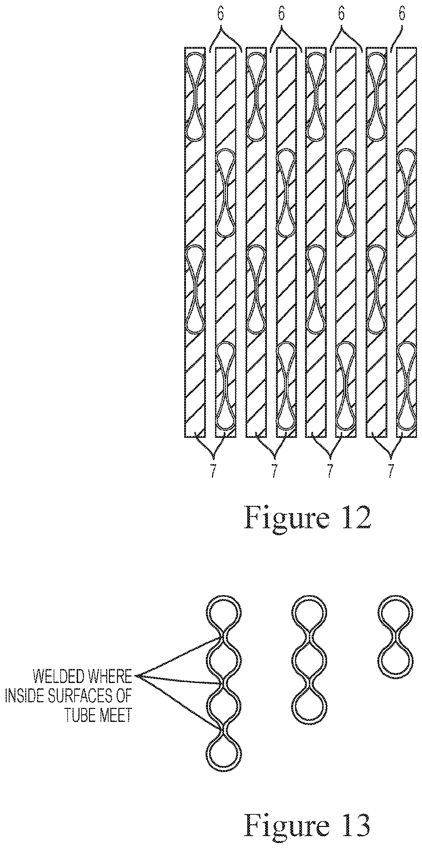

Figure 12 shows graphical representation of the open air face area 6 to tube face area 7 for a "peanut" unit evaporative heat exchanger tube bundle of the present invention. The open air face area is nearly the same as for a prior art heat exchange coil of the same volume so that the same amount of air can flow through the coil without changing the fan size or power. However, a coil according to the present invention with two-lobed or "peanut" shaped tubes has twice the prime external tube surface area of a conventional evaporative heat exchanger tube bundle of the same volume.

Figure 13 shows additional multi-lobe tube embodiments. According to various embodiments, the lobed-tubes may have 2, 3, 4 or more lobes. And the longitudinal axis of the tube cross-section may be tilted from 0 to 25 degrees from vertical.

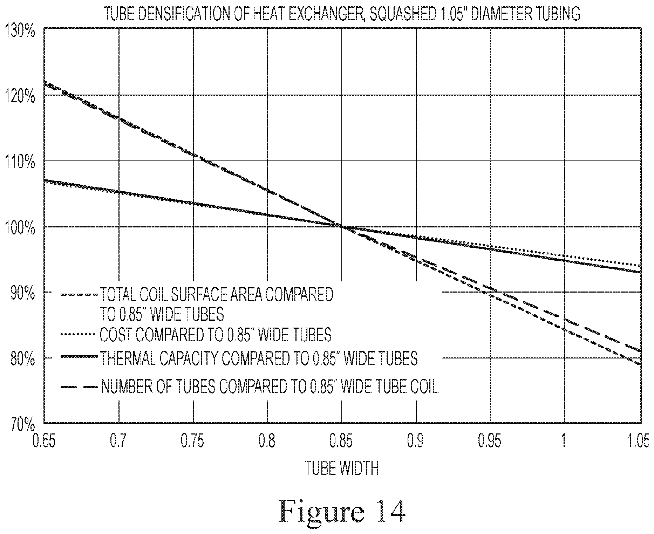

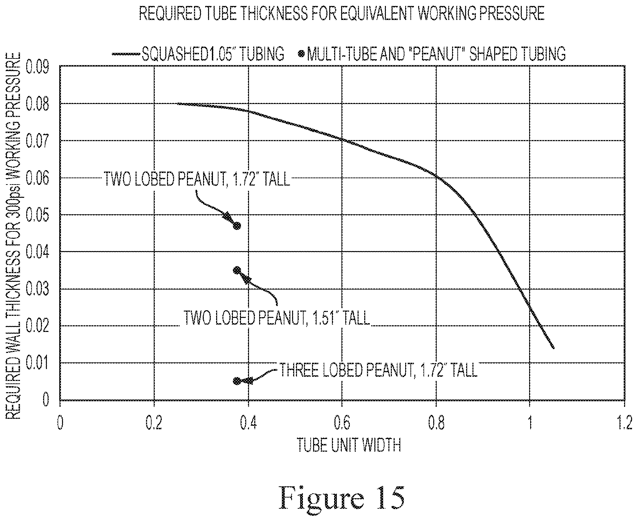

Figure 14 shows the effect of densifying a coil by using progressively narrower or "squashed" tubes of the same diameter and thickness, i.e., starting with round tubes of 2.67cm (1.05 inch) diameter (farthest-right points on the chart), the total coil surface area, the cost, the thermal capacity and the number of tubes was examined for a tube coil having the same volume/outside dimensions. The bottom axis reflects decreasing tube width, from right to left, as 2.67cm (1.05 inch) tubes having tube wall thickness of 0.140cm (0.055 inches) are squashed into increasingly elliptical tubes. The left axis shows the percentage coil surface, cost, thermal capacity or number of tubes, relative to a coil containing standard elliptical tubes having a width of 2.16cm (0.85 inches). This chart shows that Cost is directly proportional to the thermal capacity. What is not reflected in this chart is that the working pressure limit of the coils decreases dramatically as the tube is squashed more and more, see Fig. 15.

Figure 15 shows the relationship between tube unit profile width and required steel tube thickness for equivalent working pressure for round and "squashed" 2.67cm (1.05") diameter tubes versus "peanut" shaped tubes with 25% more external surface area. The bottom axis shows tube width, starting on the far right 3.0cm (1.2 inches). The left axis shows the required tube wall thickness for safe operation at 300 psi working pressure. The line that extends from the bottom right quadrant of the chart to the top left shows how the tube thickness required for operation at 2.07MPa (300 psi) goes from approximately 0.038cm (0.015 inches) for a round 2.67cm (1.05 inch) tube, to approximately 0.140cm (0.055 inches) for an elliptical tube squashed from 2.67cm (1.05 inches) to 2.16cm (0.85 inches), to approximately 0.203cm (0.080 inches) for an elliptical tube squashed from 2.67cm (1.05 inches) to 0.635cm (0.25 inches). In short, this line shows that as a 2.67cm (1.05 inch) tube is squashed (in order for example to fit more tubes in a coil), the thickness of the tube wall necessary to maintain working pressure of 2.07MPa (300 psi) increases dramatically, thus increasing weight, and material and manufacturing costs. However, Figure 15 also shows, surprisingly, that two and three-lobed peanut shaped tubes of the present invention have unexpectedly and significantly lower tube wall thickness requirements in order to operate at 2.07MPa (300 psi) working pressure. For example, a two-lobed tube having a height of 4.37cm (1.72 inches) requires a tube wall thickness of only 0.122cm (0.048 inches), which is less than the 0.140cm (0.055 inch) tube wall thickness of prior art 2.16cm (0.85 inch) elliptical tubes. A two-lobed tube having a height of 3.84cm (1.51 inches) requires a tube wall thickness of only 0.091cm (0.036 inches) for safe operation at 2.07MPa (300 psi) working pressure, and a three-lobed tube 4.37cm (1.72 inches) in height requires a tube wall thickness of only 0.0128cm (0.005 inches) to operate safely at 2.07MPa (300 psi)working pressure.

## Claims

1. An air-over evaporative heat exchanger coil comprised of:
a plurality of multi-lobed tubes (4a;4b) arranged in a tube bundle wherein lobes of the coil being **characterized in that** said lobes of said multi-lobed tubes are separated from one-another by a pinch weld located where opposing inside tube surfaces meet.

2. The device according to claim 1 wherein the multi-lobed tubes (4a;4b) have exactly two lobes.

3. The device according to claim 1 wherein the multi-lobed serpentine tubes (4a,4b) have exactly three lobes.

4. The device according to claim 1 with 100%-300% of the tube surface area of a coil having the same external dimensions with elliptical tubes (4a;4b) having a minor diameter of 2.16cm (0.85 inches), and a major diameter of 3.175cm (1.250 inches).

5. The device according to claim 1 with 25%-150% of the open-air passage area of a coil having the same external dimensions with elliptical tubes (4a;4b), having a minor diameter of 2.16cm (0.85 inches), and a major diameter of 3.175cm (1.250 inches).

6. The device according to any of claims 1 to 3 wherein the major axis of the tubes (4a;4b) is tilted 0 to 25 degrees relative to vertical.

7. An evaporative heat exchanger for cooling or condensing a process fluid, comprising:
an indirect heat exchange section;
a water distribution system (103) located above the indirect heat exchange section and
configured to spray water over the indirect heat exchange section;
the indirect heat exchange section comprising a process fluid inlet header (113) and a process fluid outlet header (115), and an array of multi-lobed tubes connecting said inlet header and said outlet header;
a plenum (117) where water distributed by said water distribution system and having received heat from said indirect section is cooled by direct contact with air moving through said plenum;
a water recirculation system (119), including pump and pipes, configured to take water collecting at the bottom of said plenum and deliver said water collecting at the bottom of said plenum_to said water distribution system;
an air mover (101) configured to move ambient air into said plenum and up through said indirect section, the heat exchanger being **characterized in that** lobes of said multi-lobed tubes are separated from one-another by a pinch weld positioned where opposing inside tube surfaces meet.

8. The device according to claim 7, wherein the multi-lobed tubes (4a;4b) have exactly two lobes.

9. The device according to claim 7, wherein the multi-lobed tubes (4a;4b) have exactly three lobes.

10. The device according to claim 7, wherein the major axis of the multi-lobed tubes (4a;4b) is tilted 0 to 25 degrees relative to vertical.

11. The device according to claim 7, wherein the plenum (117) contains fill.

12. The device according to claim 1 or claim 7, wherein said tubes (4a;4b) are finned.

13. The device according to claim 1 or claim 7, said tubes (4a;4b) having tube heights of 3.175cm (1.250 inches) to6.35cm (2.500 inches) with lobe widths of 0.508cm (0.200inches) to 1.27cm (0.500 inches) and tube wall width from 0.0128cm (0.005 inches) to 0.140cm (0 .055inches) and wherein said tubes can withstand working pressure of 2.07MPa (300 psi).

14. The device according to claim 1 or 7, said tubes having tube heights of 4.57cm (1.790 inches), a tube width at a widest cross-section of each lobe of 0.953cm (0.375 inches), and a tube wall width of 0.0140cm (0.055 inches), and wherein said tubes can withstand working pressures of 2.07 MPa (300 psi).

15. The device according to claim 1 wherein the multi-lobed tubes (4a;4b) are straight and each length of straight multi-lobed tube is connected at a first end to a process fluid inlet header (113) and at a second end to a process fluid outlet header (115).

16. The device according to claim 1 wherein the multi-lobed tubes (4a;4b) are serpentine and each serpentine tube comprises a plurality of lengths connected at each end to adjacent lengths of the same serpentine tube by tube bends and wherein a first end of each said serpentine tube is connected at one end to a process fluid inlet header (113), and at a second end to a process fluid outlet header(115)

## Patentansprüche

1. Spirale für verdampfenden Air-over-Wärmetauscher, zusammengesetzt aus:
einer Vielzahl von mehrlappigen Rohren (4a;4b),
die in einem Rohrbündel angeordnet sind, wobei Lappen der Spirale **dadurch gekennzeichnet sind,**
**dass** die Lappen der mehrlappigen Rohre durch eine Quetschschweißung voneinander getrennt sind, die sich dort befindet, wo gegenüber liegende Innenseitenrohroberflächen sich treffen.

2. Vorrichtung nach Anspruch 1, wobei die mehrlappigen Rohre (4a;4b) genau zwei Lappen aufweisen.

3. Vorrichtung nach Anspruch 1, wobei die mehrlappigen Serpentinenrohre (4a;4b) genau drei Lappen aufweisen.

4. Vorrichtung nach Anspruch 1 mit 100 % bis 300 % des Flächeninhalts der Rohroberfläche einer Spirale, welche die gleichen Außenabmessungen aufweist, mit elliptischen Rohren (4a;4b), die einen kleineren Durchmesser von 2,16 cm (0,85 Zoll) und einen größeren Durchmesser von 3,175 cm (1,250 Zoll) haben.

5. Vorrichtung nach Anspruch 1 mit 25 % bis 150 % des Flächeninhalts des Open-Air-Durchgangs einer Spirale, welche die gleichen Außenabmessungen aufweist, mit elliptischen Rohren (4a;4b), die einen kleineren Durchmesser von 2,16 cm (0,85 Zoll) und einen größeren Durchmesser von 3,175 cm (1,250 Zoll) haben.

6. Vorrichtung nach einem der Ansprüche 1 bis 3, wobei die Hauptachse der Rohre (4a;4b) 0 bis 25 Grad relativ zu der Vertikalen gekippt ist.

7. Verdampfender Wärmetauscher zum Kühlen und Kondensieren eines Prozessfluids, umfassend:
einen indirekten Wärmetauscherabschnitt;
ein Wasserverteilungssystem (103), das sich oberhalb des indirekten Wärmetauscherabschnitts befindet und ausgestaltet ist, um Wasser über den indirekten Wärmetauscherabschnitt zu sprühen;
wobei der indirekte Wärmetauscherabschnitt einen Prozessfluideinlasskopf (113) und einen Prozessfluidauslasskopf (115) und eine Gruppierung von mehrlappigen Rohren umfasst, welche den Einlasskopf und den Auslasskopf verbinden;
einen Sammelraum (117), wo durch das Wasserverteilungssystem verteiltes Wasser, welches Wärme von dem indirekten Abschnitt aufgenommen hat, durch direkten Kontakt mit Luft gekühlt wird, die sich durch den Sammelraum bewegt;
ein Wasserumlaufsystem (119) einschließlich Pumpen und Leitungen, das ausgestaltet ist, um Wasser aufzunehmen, das sich am Boden des Sammelraums sammelt, und das Wasser, das sich am Boden des Sammelraums sammelt, an das Wasserverteilungssystem abzugeben;
einen Luftbeweger (101), der ausgestaltet ist, um Umgebungsluft in den Sammelraum und aufwärts durch den indirekten Abschnitt zu bewegen, wobei der Wärmetauscher **dadurch gekennzeichnet ist, dass** Lappen der mehrlappigen Rohre durch eine Quetschschweißung voneinander getrennt sind, die dort positioniert ist, wo gegenüber liegende Innenseitenrohroberflächen sich treffen.

8. Vorrichtung nach Anspruch 7, wobei die mehrlappigen Rohre (4a;4b) genau zwei Lappen aufweisen.

9. Vorrichtung nach Anspruch 7, wobei die mehrlappigen Rohre (4a;4b) genau drei Lappen aufweisen.

10. Vorrichtung nach Anspruch 7, wobei die Hauptachse der mehrlappigen Rohre (4a;4b) 0 bis 25 Grad relativ zu der Vertikalen gekippt ist.

11. Vorrichtung nach Anspruch 7, wobei der Sammelraum (117) Füllung enthält.

12. Vorrichtung nach Anspruch 1 oder Anspruch 7, wobei die Rohre (4a;4b) berippt sind.

13. Vorrichtung nach Anspruch 1 oder Anspruch 7, wobei die Rohre (4a;4b) Rohrhöhen von 3,175 cm (1,250 Zoll) bis 6,35 cm (2,500 Zoll) mit Lappenbreiten von 0,508 cm (0,200 Zoll) bis 1,27 cm (0,500 Zoll) und Rohrwandbreiten von 0,0128 cm (0,005 Zoll) bis 0,140 cm (0,055 Zoll) haben, und wobei die Rohre Arbeitsdrücke von 2,07 MPa (300 psi) aushalten können.

14. Vorrichtung nach Anspruch 1 oder 7, wobei die Rohre Rohrhöhen von 4,57 cm (1,790 Zoll), eine Rohrbreite am breitesten Querschnitt jedes Lappens von 0,953 cm (0,375 Zoll) und eine Rohrwandbreite von 0,0140 cm (0,055 Zoll) haben, und wobei die Rohre Arbeitsdrücke von 2,07 MPa (300 psi) aushalten können.

15. Vorrichtung nach Anspruch 1, wobei die mehrlappigen Rohre (4a;4b) gerade sind und jede Länge des geraden mehrlappigen Rohrs an einem ersten Ende mit einem Prozessfluideinlasskopf (113) und an einem zweiten Ende mit einem Prozessfluidauslasskopf (115) verbunden ist.

16. Vorrichtung nach Anspruch 1, wobei die mehrlappigen Rohre (4a;4b) Serpentinen sind und jedes Serpentinenrohr eine Vielzahl von Längen umfasst, die an jedem Ende mit benachbarten Längen des gleichen Serpentinenrohrs mittels Rohrbiegungen verbunden sind, und wobei ein erstes Ende von jedem derartigen Serpentinenrohr an einem Ende mit einem Prozessfluideinlasskopf (113) und an einem zweiten Ende mit einem Prozessfluidauslasskopf (115) verbunden ist.

## Revendications

1. Serpentin d'échangeur de chaleur à évaporation d'air, comprenant :
une pluralité de tubes multilobés (4a ; 4b) agencés dans un faisceau de tubes, les lobes de la bobine étant **caractérisés en ce que** lesdits lobes desdits tubes multilobés sont séparés les uns des autres par un joint de soudure situé à l'endroit où les surfaces intérieures opposées des tubes se rencontrent.

2. Dispositif selon la revendication 1, les tubes multilobés (4a ; 4b) ayant exactement deux lobes.

3. Dispositif selon la revendication 1, les tubes en serpentins multilobés (4a ; 4b) ayant exactement trois lobes.

4. Dispositif selon la revendication 1 avec 100 % à 300 % de la surface du tube d'une bobine ayant les mêmes dimensions externes avec des tubes elliptiques (4a ; 4b) ayant un petit diamètre de 2,16 cm (0,85 pouce), et un grand diamètre de 3,175 cm (1,250 pouce).

5. Dispositif selon la revendication 1 avec 25 % à 150 % de la surface de passage à l'air libre d'un serpentin ayant les mêmes dimensions externes avec des tubes elliptiques (4a ; 4b), ayant un petit diamètre de 2,16 cm (0,85 pouce), et un grand diamètre de 3,175 cm (1,250 pouce).

6. Dispositif selon l'une quelconque des revendications 1 à 3, le grand axe des tubes (4a ; 4b) étant incliné de 0 à 25 degrés par rapport à la verticale.

7. Échangeur de chaleur à évaporation pour refroidir ou condenser un fluide de traitement, comprenant :
une section d'échange de chaleur indirecte ;
un système de distribution d'eau (103) situé au-dessus de la section d'échange de chaleur indirecte et configuré pour pulvériser de l'eau sur la section d'échange de chaleur indirecte ;
la section d'échange de chaleur indirect comprenant un collecteur d'entrée de fluide de traitement (113) et un collecteur de sortie de fluide de traitement (115), et un réseau de tubes multilobés raccordant ledit collecteur d'entrée et ledit collecteur de sortie ;
un plénum (117) où l'eau distribuée par ledit système de distribution d'eau et ayant reçu de la chaleur de ladite section indirecte est refroidie par contact direct avec l'air se déplaçant à travers ledit plénum ;
un système de recirculation d'eau (119), comprenant une pompe et des tuyaux, configuré pour prendre l'eau collectée au fond dudit plenum et délivrer ladite eau collectée au fond dudit plenum audit système de distribution d'eau ;
un dispositif de déplacement d'air (101) configuré pour déplacer l'air ambiant dans ledit plénum et vers le haut à travers ladite section indirecte, l'échangeur de chaleur étant **caractérisé en ce que** des lobes desdits tubes multilobés sont séparés les uns des autres par un joint de soudure positionné à l'endroit où les surfaces intérieures opposées des tubes se rencontrent.

8. Dispositif selon la revendication 7, les tubes multilobés (4a ; 4b) ayant exactement deux lobes.

9. Dispositif selon la revendication 7, les tubes multilobés (4a ; 4b) ayant exactement trois lobes.

10. Dispositif selon la revendication 7, le grand axe des tubes multilobés (4a ; 4b) étant incliné de 0 à 25 degrés par rapport à la verticale.

11. Dispositif selon la revendication 7, le plénum (117) contenant un remplissage.

12. Dispositif selon la revendication 1 ou la revendication 7, lesdits tubes (4a ; 4b) étant à ailettes.

13. Dispositif selon la revendication 1 ou la revendication 7, lesdits tubes (4a; 4b) ayant des hauteurs de tube de 3,175 cm (1,250 pouce) à 6,35 cm (2,500 pouces) avec des largeurs de lobe de 0,508 cm (0,200 pouce) à 1,27 cm (0,500 pouce) et une largeur de paroi de tube de 0,0128 cm (0,005 pouce) à 0,140 cm (0,0055 pouce) et lesdits tubes pouvant supporter une pression de travail de 2,07 MPa (300 psi).

14. Dispositif selon la revendication 1 ou 7, lesdits tubes ayant des hauteurs de tube de 4,57 cm (1,790 pouce), une largeur de tube au niveau d'une section transversale la plus large de chaque lobe de 0,953 cm (0,375 pouce), et une largeur de paroi de tube de 0,0140 cm (0,055 pouce), et lesdits tubes pouvant supporter des pressions de travail de 2,07 MPa (300 psi).

15. Dispositif selon la revendication 1, les tubes multilobés (4a ; 4b) étant droits et chaque longueur de tube multilobé droit étant raccordée à une première extrémité à un collecteur d'entrée de fluide de traitement (113) et à une seconde extrémité à un collecteur de sortie de fluide de traitement (115).

16. Dispositif selon la revendication 1, les tubes multilobés (4a ; 4b) étant en serpentin et chaque tube en serpentin comprenant une pluralité de longueurs raccordées à chaque extrémité à des longueurs adjacentes du même tube en serpentin par des coudes de tube et une première extrémité de chacun desdits tubes en serpentin étant raccordé au niveau d'une extrémité à un collecteur d'entrée de fluide de traitement (113) et au niveau d'une seconde extrémité à un collecteur de sortie de fluide de traitement (115).
